# EUROPEAN PATENT APPLICATION

(11) **EP 4 790 756 A1**
(43) Date of publication of application: **12.08.2026**
(21) Application number: 25156153.6
(22) Date of filing: 06.02.2025
(51) Int. Cl.: H01M 4/131

(54) **MULTI-LAYER BATTERY ELECTRODES**

(71) Applicant: BASF SE, 67056 Ludwigshafen am Rhein (DE)
(72) Inventor: RHODE, Wolfgang, 67056 Ludwigshafen am Rhein (DE); RAUPP, Sebastian Marius, 67056 Ludwigshafen am Rhein (DE); BERKES, Balazs Barnabas, 67056 Ludwigshafen am Rhein (DE); SCHMIDT- HANSBERG, Benjamin, 67056 Ludwigshafen am Rhein (DE)
(74) Representative: RDL Patentanwälte PartG mbB

(57) **Abstract**

The present invention concerns a multilayer composite battery electrode comprising active electrode materials obtained by direct recycling of battery materials from batteries comprising coated metal foil electrodes which are common in, e.g., lithium ion batteries or other alkali metal batteries. The battery materials are either obtained as production scrap from electrode and/or cell production, or obtained from end-of-life batteries (EoL batteries) by sorting and healing processes as they are described in literature.

## Description

### Field of the invention

The present invention concerns a multilayer composite battery electrode comprising active electrode materials obtained by direct recycling of battery materials from batteries comprising coated metal foil electrodes which are common in, e.g., lithium ion batteries or other alkali metal batteries. The battery materials are either obtained as production scrap from electrode and/or cell production, or obtained from end-of-life batteries (EoL batteries) by sorting and healing processes as they are described in literature.

### Background

In contrast to hydrometallurgical recycling processes where all metallic electrode constituents are dissolved, separated and purified, resulting in the corresponding metal salts that can be introduced into the synthesis of pristine active electrode materials, direct recycling processes rely on sorting processes to separate different solid components from each other (e.g. the anode from the cathode materials), and especially in the case of EoL batteries, on healing processes where structural defects and compositional deficiencies (e.g. Li deficiency) are repaired.

The direct recycling of electrode active materials (anode or cathode active materials) from scrap occurring in the production of batteries or battery components avoids the costly and carbon dioxide-releasing metallurgical recycling processes usually employed in the recycling of end of life batteries and the production of pristine electrode active materials. While direct recycling processes provide economic and ecologic advantages, solid impurities remaining in the recycled materials, e.g., from the current collector foils on which the electrode active materials are coated or metal particles originating from other parts of batteries, e. g., the casing, may be harmful for the batteries produced from such a directly recycled material. In particular, solid impurities comprising dimensions that are larger than the dimensions of the active electrode materials in at least one direction are considered as critical. Such particles may puncture the cell's separator diaphragm and ultimately lead to short-circuit faults and result in fatal failure of the battery cell or even the whole battery pack. As most electrodes are calendered after the coating, larger particles are usually flattened. However, when such foils are bent, flattened particles may protrude from the coating surface.

It is an objective of the present disclosure to provide a battery electrode with a coating comprising active electrode material obtained by direct recycling of battery materials from batteries comprising coated metal foil electrodes and comprising metal particles as contaminant, wherein no metal particles protrude from the surface of the coating of the battery, and a process for the production of the battery electrode.

### Summary of the invention

The present disclosure provides a multilayer composite battery electrode comprising different layers of electrode active materials coated on a carrier foil. The multilayer composite battery electrode comprises at least one layer containing electrode active material obtained by direct recycling of battery materials from batteries comprising metal foils coated with an active electrode material, for instance, scrap from the production of batteries, or battery components containing said electrode active materials. The recycled electrode active material comprises metal particles as contaminant, e.g., aluminum or copper particles.

The present disclosure also provides processes for the production of the multilayer composite battery electrode.

### Detailed description

The present disclosure provides a multilayer composite battery electrode comprising different layers of electrode active materials coated on a carrier foil. In some embodiments of the multi-layer battery electrode, the carrier foil is an aluminum foil. In some embodiments of the multi-layer battery electrode, the carrier foil is a copper foil.

In some embodiments, the multilayer composite battery electrode is a cathode comprising a current-collector metal foil and a cathode active material. In other embodiments, the multilayer composite battery electrode is an anode comprising a current-collector metal foil and an anode active material. In the case of lithium-ion-batteries, the cathode current-collector metal foil is made from aluminum or aluminum alloys, and the anode current collector metal foil is made from copper. In other alkali-metal-ion batteries, such as sodium ion batteries (SIB), the anode current-collector metal foil can also be made from aluminum or aluminum alloys. The multi-layer electrodes of the present disclosure can be used in batteries with liquid or solid electrolyte systems.

The multi-layer battery electrode comprises a metal foil, and at least one surface of the metal foil features a coating of at least one active electrode material. The coating of at least one active electrode material comprises at least two layers of electrode active material arranged one above the other, wherein at least one of the layers which is not the topmost layer comprises at least one active electrode material obtained by direct recycling of battery materials from batteries comprising metal foils coated with an active electrode material. The at least one active electrode material obtained by direct recycling comprises metal particles as contaminant as a result of the direct recycling process.

In some embodiments of the multi-layer battery electrode, both surfaces of the metal foil feature a coating of at least one active electrode material. In some embodiments, one of the surfaces of the metal foil features a single-layer coating of at least one pristine active electrode material not comprising metal particles from a direct recycling process. In other embodiments, both surfaces of the metal foil feature a coating comprising at least two layers of electrode active material arranged one above the other, wherein at least one of the layers which is not the topmost layer comprises at least one active electrode material obtained by direct recycling of battery materials from batteries comprising metal foils coated with an active electrode material and comprises metal particles as contaminant from the direct recycling process.

The multilayer composite battery electrode of the present disclosure comprises at least one layer containing electrode active material obtained by direct recycling of batteries or battery components comprising metal foils coated with an active electrode material. In some embodiments, the electrode active material is obtained by direct recycling of scrap from the production of batteries. In other embodiments, the electrode active material is obtained by direct recycling of battery components containing said electrode active materials. In still other embodiments, the electrode active material is obtained from end-of-life batteries (EoL batteries) by sorting and healing processes as they are described in literature. The recycled electrode active material comprises metal particles as contaminant. In some embodiments, the metal particles consist of aluminum. In other embodiments, the metal particles consist of copper.

In some embodiments of the multi-layer battery electrode, the electrode active material is a cathode active material (CAM).

In some embodiments, the CAM has the general formula Li₁₊ₓTM₁₋ₓO₂ with x being in the range of from -0.01 to + 0.05, TM is a combination of metals comprising Ni, Co, Mn, and Al. In some embodiments, the CAM is derived from nickel-cobalt-manganese oxide (NCM) battery materials. In other embodiments, the CAM is derived from lithium cobalt oxide (LiCoO₂) battery materials. In yet other embodiments, the CAM is derived from lithium manganese oxide (LiMn₂O₄ spinel, or Li₂MnO₃-based lithium-rich layered materials, LMR-NCM) battery materials. In still other embodiments, the CAM is derived from lithium nickel cobalt aluminum oxides (NCA) battery materials.

Lithium ion batteries can comprise a variety of different cathode active materials, for instance, lithium cobalt oxide (LiCoO₂), lithium iron phosphate (LiFePO₄ or LFP), lithium manganese oxide (LiMn₂O₄ spinel, or Li₂MnO₃-based lithium-rich layered materials, LMR-NCM), lithium nickel cobalt manganese oxide (NCM) and lithium nickel cobalt aluminum oxides (NCA).

In some embodiments, the cathode active material is selected from the group consisting of lithiated nickel cobalt manganese oxide, lithiated nickel cobalt aluminum oxide, and lithium metal phosphate.

In some embodiments, the CAM comprises lithium metal phosphate of formula LiₓMPO₄, wherein x is an integer greater than or equal to one, and M is chosen from metals, transition metals, rare earth metals, and combinations thereof. Examples include lithium iron phosphate (LiFePO₄ or LFP) and lithium iron manganese phosphate (LFMP).

In some embodiments, the CAM comprises lithiated nickel cobalt manganese oxide of formula Li₁₊ₓ(NiₐCo_{b}Mn_{c}M1_{d})₁₋ₓO₂, wherein M1 is chosen from Mg, Ca, Ba, Al, Ti, Zr, Zn, Mo, V and Fe, zero ≤ x ≤ 0.2, 0.1 ≤ a ≤ 0.95, zero ≤ b ≤ 0.9 (such as 0.05 < b ≤ 0.5), zero ≤ c ≤ 0.6, zero ≤ d ≤ 0.1, and a + b + c + d = 1. Exemplary lithiated nickel cobalt manganese oxides include Li₍₁₊ₓ₎[Ni_{0.33}Co_{0.33}Mn_{0.33}]₍₁₋ₓ₎O₂, Li₍₁₊ₓ₎[Ni_{0.5}Co_{0.2}Mn_{0.3}]₍₁₋ₓ₎O₂, Li₍₁₊ₓ₎[Ni_{0.6}Co_{0.2}Mn_{0.2}]₍₁₋ₓ₎O₂, Li₍₁₊ₓ₎[Ni_{0.7}Co_{0.2}Mn_{0.3](1-x)}O₂, Li₍₁₊ₓ₎[Ni_{0.8}Co_{0.1}Mn_{0.1](1-x)}O₂ each with x as defined above, and Li[Ni_{0.85}Co_{0.13}Al_{0.02}]O₂.

In some embodiments, the CAM comprises lithiated nickel-cobalt aluminum oxides of formula Li[NiₕCoᵢAlⱼ]O₂₊ᵣ, wherein h ranges from 0.8 to 0.90, i ranges from 0.1 to 0.3, j ranges from 0.01 to 0.10, and r ranges from zero to 0.4.

In some embodiments, the CAM comprises LiₓMO₂ wherein x is an integer greater than or equal to one, and M is chosen from metals, transition metals, rare earth metals, and combinations thereof.

In some embodiments, the CAM comprises active materials used in sodium-ion-batteries (SIB), such as transition metal oxide, like sodium iron manganese oxide, or polyanion based materials like phosphates or vanadates, Prussian blue and analogues, such as sodium Prussian white.

In some embodiments of the multi-layer battery electrode, the electrode active material is an anode active material (AAM).

The anode active material (AAM) typically is a material capable of storing electrical energy, e.g., a material capable of intercalating lithium and deintercalating lithium. Examples of suitable anode active materials include graphite, soot, SiC, and SiOₓ. In some embodiments, the AAM comprises natural graphite, synthetic graphite or mixtures of both, amorphous carbon, glassy carbon, graphene, carbon nano-rods, nanotubes and nanofibers, silicon and silicon based materials, silicon oxides, silicon containing carbon, transition metal oxides, like titanates, zirconates, transition metal chalcogenides, alloy materials (tin, antimony, aluminum, magnesium, silver and their alloys), transition metal carbides, phosphides and nitrides. Preferred anode active materials are selected from graphite, including natural graphite, synthetic graphite and fiber graphite, silicon, silicon oxide, silicon carbon composite, tin, lithium, aluminum, lithium titanium oxide and lithium silicon. More preferred are graphite, silicon, silicon oxide, and silicon carbon composites. Particularly preferred is graphite, for example natural graphite, synthetic graphite or fiber graphite. Suitable anode active materials, are available commercially, for instance, SMG-A5^{®} from Showa Denko now Resonac Group.

The multi-layer battery electrode comprises at least one coating of at least one active electrode material which comprises at least two layers of electrode active material arranged one above the other, wherein at least one of the layers which is not the topmost layer comprises at least one active electrode material obtained by direct recycling of battery materials from batteries comprising metal foils coated with an active electrode material. The topmost layer of the coating comprises at least one pristine active electrode material which does not contain metal particles from the direct recycling process.

In some embodiments, the coating of at least one active electrode material comprises two layers of electrode active material arranged one above the other. In some embodiments, the coating of at least one active electrode material comprises more than two layers of electrode active material arranged one above the other, e.g., three layers, or four layers.

The upper face of the coating layer comprising the material obtained by direct recycling is covered by a coating layer comprising only pristine electrode active material which does not contain metal particles from the direct recycling process. This coating layer of pristine material is positioned within the composite coating such as to shield sensitive electrode components, e.g., the separator, from the layer containing the material obtained by the direct recycling process.

In some embodiments, the surface specific weight of the dry coating is in the range of from 15 g/m² to 1.000 g/m². In some embodiments, the surface specific weight of the coating is in the range of from 25 to 500 g/m². The thickness of the coating can be calculated by dividing the coating surface specific weight by the density of the coating.

In some embodiments, the ratio of the surface specific weight of the dry coating of the topmost layer and the surface specific weight of the layer or layers positioned below the topmost layer is in the range of from 100:1 to 1:10. In some embodiments, the ratio of the surface specific weight of the dry coating of the topmost layer and the surface specific weight of the layer or layers positioned below the topmost layer is in the range of from 50:1 to 1:5 preferably from 10:1 to 1:1.This ratio may be adapted according to different applications.

Generally, the ratio will be determined by the amount of scrap available. It is preferred that the ratio is higher than 1:1, i.e., the surface specific weight of the topmost layer of pristine material is higher than the surface specific weight of the layers beneath.

In some embodiments, the ratio of the surface specific weights corresponds to the ratio of pristine electrode active material and recycled electrode active material available within the corresponding electrode production plant. In the case of production scrap, the ratio of the surface specific weights will correspond to the percentage of production scrap produced. For example, in the case of 10wt.% production scrap, the surface specific weight of the top-layer will amount to approximately 90% of the total coating surface specific weight.

It is also important to consider that by the recycling process of the multi-layer electrodes, the amount of contamination in the scrap layer will increase due to the recycling of multi-layer production scrap. In a continuous process, the contamination will attain a steady state concentration. In some cases of high contamination, it might be necessary to dilute the material in the scrap layer by adding pristine material and decreasing the specific surface weight ratio accordingly.

The present disclosure also provides a process for producing the multi-layer battery electrode. The process comprises the steps of
a) providing a first coating composition comprising at least one active electrode material obtained by direct recycling of battery materials from batteries comprising metal foils coated with an active electrode material and comprising metal particles as contaminant,
b) providing a second coating composition comprising at least one pristine active electrode material not containing metal particles from direct recycling,
c) providing a metal foil,
d) coating at least one face of the metal foil with at least one layer of the first coating composition and at least one layer of the second coating composition to produce a coating comprising at least two layers of electrode active material arranged one above the other, wherein the second coating composition generates the topmost layer of the coating.

The process comprises providing a first coating composition comprising at least one active electrode material obtained by direct recycling of batteries or battery components comprising metal foils coated with an active electrode material and comprises metal particles as contaminant.

The active electrode material is obtained by direct recycling of battery materials from batteries or battery components comprising metal foils coated with an active electrode material, e.g., from battery scraps. Battery scraps may stem from, e.g., production waste such as off-spec material. In some embodiments, a battery material is obtained from mechanically treated battery scraps, for example from battery scraps treated in a hammer mill or in an industrial shredder. Such material may have an average particle diameter (D50) ranging from 1 µm to 1 cm, such as from 1 µm to 500 µm, for example, from 3 to 250 µm. Larger parts of the battery scrap like the housings, the wiring and the electrode carrier films may be separated mechanically such that the corresponding materials may be excluded from the battery material that is employed in the process.

Mechanically treated battery scrap may be subjected to a solvent treatment to dissolve and separate polymeric binders used to bind the electrode active material to current collector films. Examples of suitable solvents include N-methylpyrrolidone, N,N-dimethyl-formamide, N,N-dimethylacetamide, N-ethylpyrrolidone, dimethylsulfoxide, triethylphosphate, γ-valerolactone and dihydrolevoglucosenon (known under the trademark cyrene) in pure form, as mixtures of at least two of the foregoing, or as a mixture with 1 % to 99 % by weight of water. For binders that are soluble or partially soluble in water, pure water is a suitable solvent.

In further embodiments of the invention, the direct recycling process employed to obtain the active electrode material is selected to produce low contamination.

In another embodiment of the invention, the amount of impurity particles contained in the material obtained from the direct recycling process is reduced by additional separation process steps which may be employed separately from the coating process or during the coating process, e.g., by sieving the coating paste in front of or within the coating orifices.

The active electrode material obtained by direct recycling comprises metal particles as contaminant. The amount of metal particles will generally be less than 10 wt.%, for instance, less than 1 wt.%, or even less than 0.1 wt.%. To achieve low levels of particulate impurities, such particles may be separated from the electrode active material by sieving, classification, gravity separation, magnetic separation (in case of magnetic impurities), eddy current separation, flotation or electro-sorting techniques. It is also advantageous to employ comminution techniques in the direct recycling process which generate low amounts of particulate impurities, e.g., punches, cross cutters, or cutting mills operated at low circumferential speeds and short residence times.

In addition to the electrode active material, the first and second coating compositions comprise a binder, e.g., a polyvinylidene fluoride (PVDF) binder, a sodium carboxymethyl cellulose binder, or styrene-butadiene-rubber binder, or mixtures of at least two of these materials.

The binder may include one or more polymeric materials typically employed as binders in formulations used in coatings for battery foils. Desirably the binder may include at least one synthetic polymer. Suitable synthetic polymers used for this purpose may be water insoluble or at least have hydrophobic characteristics which can be imparted by hydrophobic and/or water insoluble monomers. Desirably the at least one synthetic polymer may exhibit a degree of elasticity and/or exhibit tackiness characteristics. Suitable polymers may be formed from one or a mixture of ethylenically unsaturated monomers, for instance acrylonitrile, methacrylonitrile, styrene, methyl acrylate, ethyl acrylate, n-butyl acrylate, tert.-butyl acrylate, sec-butyl acrylate 2-ethyl hexyl acrylate, cyclohexyl acrylate, isobornyl acrylate, hydroxyethyl acrylate, hydroxypropyl acrylate, vinyl acetate, methylmethacrylate, ethyl methacrylate, n-butyl methacrylate sec-butyl methacrylate, tert.-butyl methacrylate, 2-ethyl hexyl methacrylate, cyclohexyl methacrylate, isobornyl methacrylate, pentyl acrylates, pentyl methacrylates, allyl esters of saturated carboxylic acids, allyl ethers, vinyl ethers, vinyl ketones, and dialkyl esters of ethylenically unsaturated dicarboxylic acids. Such monomers tend to have a hydrophobic characteristic. It may also be desirable to include at least one hydrophilic monomer into a monomer mixture that comprises hydrophobic monomers, for instance as described above.

In some embodiments, the amount of binder is in the range of from 1.5 wt.% to 2 wt.%, e.g., 1.85 wt.%, relative to the solids content of the coating composition.

In some embodiments, the first and second coating compositions also comprise carbon black. In some embodiments, the amount of carbon black is in the range of from 0.1 to 10 wt.%, for instance, from 0.5 to 5 wt.%, or of from 1.5 wt.% to 2 wt.%, e.g., 1.75 wt.%, relative to the solids content of the coating composition.

In some embodiments, the first and second coating compositions have a solids content in the range of from 20 to 85 wt.%, for instance, 60 wt.% to 70 wt.%, e.g., 65 wt.%, relative to the total weight of the coating composition. The first and second coating compositions also comprise a solvent. In some embodiments, the solvent is N-methyl-pyrrolidone (NMP). In some embodiments, the solvent is water.

The process also involves coating at least one face of a metal foil with at least one layer of the first coating composition and at least one layer of the second coating composition to produce a coating comprising at least two layers of electrode active material arranged one above the other, wherein the second coating composition generates the topmost layer of the coating.

In some embodiments of the process, a multi-layer coating process is used to produce a multilayer composite battery electrode wherein the topmost layer of the electrode coating which contacts the cell separator diaphragm exclusively consists of pristine active electrode material which does not contain metal particles from direct recycling as contaminants, while the deeper layers may contain metal particles from direct recycling as contaminants.

In some embodiments, the multi-layer coating is prepared by subsequent coating steps. That is, the layer of the coating produced by the first coating composition and the layer of the coating produced by the second coating composition are produced one after another in coating step d).

Between each coating step, the coating may be partially or completely dried. Such a sequential coating process also allows for a calendering between subsequent coating steps. In some embodiments, each layer of the coating is dried before the next layer is produced. In further embodiments, each layer of the coating is calendered before the next layer is produced.

An exemplary manufacturing process to produce the multi-layer electrodes by sequential coating of the layers comprises applying a first coating to a metal foil in a first coating stage, optionally drying and optionally calendering the first coating, and either performing additional coating steps in consecutive coating stages (continuous production) or re-introducing the foil with the first coating into the coater and applying a second or further coating. At the end of the process, the final multi-layer-coated foil is dried and calendered. The sequential coating process is particularly useful for small-series manufacturing or lab-scale production.

In other embodiments of the process, the layer of the coating produced by the first coating composition and the layer of the coating produced by the second coating composition are produced simultaneously in coating step d).

In some embodiments, a multi-layer slot die is used to produce the coating comprising at least two layers of electrode active material arranged one above the other. The production of multi-layer coatings using a multi-layer slot die is well known in the art. Hoffmann et al.: "Optimized battery electrodes with primer layers by simultaneous two-layer slot-die coating" (Eur. Phys. J. Spec Top., https//doi.org/10.1140/epjs/s11734-024-01398-7)) describe the coating of current collector foils with a primer and with the active electrode material by employing a two-layer slot die (RapidEdge Technology GmbH, Germany) with coating width 220 mm on a pilot coater (KTF-S Mathis AG, Switzerland).

In general, the machine settings for simultaneous coating processes depend on the viscosities, the surface tension, and the thickness of the different layers. In the case of scrap recycling with contents of metallic contaminants below 1 wt.%, the rheological and wetting properties of the layers containing the pristine and the scrap material, respectively, will be similar, provided that the same binder and additive system is applied. Changes in the binder and additive system of one layer may yield different rheological and wettability properties.

In general, the coating of one side of the electrode will comprise a top layer of pristine active electrode material and at least one layer below the topmost layer comprising recycled material. In electrodes that are coated on either sides, each side may have such a multi-layer coating, or one side may comprise only a single-layer coating consisting of pristine material. The latter set-up may be advantageous in case of low scrap rates, because only one multi-slot die head is required. In the case of high scrap rates, it may be advantageous to have multi-layers coatings on both sides of the electrode; otherwise the scrap layer thickness may become too large. Each multi-layer coating may comprise more than two layers. The number and composition of the layers can be varied according to the requirements of electrode performance and electrode manufacturing process or manufacturing costs. The concentrations of binders, conductivity additives, and even the types and concentrations of active electrode materials may be varied between different layers. The only prerequisite is that the recycled material is contained in layers below the top layer of pristine material.

A multi-layer coating with more than two layers on at least one side of the metal foil may be advantageous in cases where production scrap differing in amount and/or size of metallic contaminants is used. In such cases, one may first coat a layer having high contaminant concentration and/or large contaminant particle diameter as the bottom layer (farthest away from the separator) of the contaminated layers and coat one or more layers having lower contaminant concentration or contaminant particle size on top of the bottom layer, and finally the topmost layer of pristine material.

### Examples:

### Example 1 (comparative)

### Preparation of Al-particle contaminants

Milling of Al-foil used for cathode manufacturing (Dimension): 1 kg (approx. 88 m) of Al foil (thickness 15 µm, width 280 mm alloy A1050 H18 from RJ & Colab. GmbH) were fed to a Wanner C17.26sv cutting mill equipped with a 0.5 mm Conidur bottom sieve and a 170 mm rotor. The rotor speed was 380 rpm, corresponding to a circumferential speed of 1.7 m/sec.

The material obtained had the following particle size distribution:

| **sieve fraction** | | **weight distribution** | **cumulative distribution (undersize)** |
|---|---|---|---|
| **[µm]** | | **[wt.%]** | **[wt.%]** |
| +1000 | | 13.1 | 100.0 |
| -1000 | +710 | 14.2 | 86.9 |
| -710 | +630 | 3.1 | 72.7 |
| -630 | +500 | 9.3 | 69.6 |
| -500 | +250 | 32.8 | 60.3 |
| -250 | +100 | 23.6 | 27.5 |
| -100 | | 3.9 | 3.9 |

The d₅₀-value of this distribution was approx. 380 µm.

The described material was sieved on a 100 µm and a 250 µm sieve and the material of the fraction -250/+100 µm was used to produce cathode active material contaminated with 5 wt.% Al particle content.

### Preparation of a coating slurry:

All equipment and components for the preparation of the coating slurry were pre-dried under vacuum.

In a glovebox, a solution of 7.5 wt.% polyvinylidene fluoride (PVDF) binder (Solef 5130) in anhydrous N-methyl-pyrrolidone (NMP) was prepared by mixing the two components in a 300 ml Thinky cup and mixing at 2000 rpm in a Thinky mixer (THINKY ARE-250, Thinky corporation, Japan) in intervals of 15 minutes for 2x 8 hours. Between the mixing intervals, the mixer was stopped, and the content was allowed to cool down to room temperature to avoid overheating and damage to the polymer. After the last stirring interval, the mixture was allowed to cool down for 30 min. Then carbon black (type C-Nergy super C65 (Imerys)) was added to the PVDF/NMP solution and mixed for another 15 min in the Thinky mixer at 2000 rpm. Then, the cathode active material (CAM21954 T45H, BASF Corp.) and the Al particles were added and stirred again for 15 min at 2000 rpm.

A coating slurry containing a dry solid content of 91.40 wt.% CAM, 1.75 wt.% carbon black (CB), 1.85 wt.% PVDF and 5.0 wt.% Al particles in NMP was obtained. The solids content of the slurry was 65 wt.%.

### Preparation of single layer cathode foil on Al-current collector:

The coating of an Al foil (thickness 15 µm, width 280 mm alloy A1050 H18 from RJ & Colab. GmbH) with the coating slurry was performed using a Zehntner coating table ZAA2300 and a doctor blade ZUA2000.60 (Zehntner GmbH) with a 60 mm width and 150 µm gap setting. The coating velocity was adjusted to 30 mm/sec at a temperature of the coating table of 80°C. In total, an amount of 5 ml of slurry was coated onto the foil. The coated foil was dried by contact drying on the coating table at 80°C.

The dried foil then was calendered at 10 bar (94 N/mm) at 25°C and a speed of 0.5 m/sec by a calender Saueressig GKL300L (Matthew Europe GmbH).

### Measurement of the coating surface roughness:

The surface roughness of the coating was measured by light microscopy employing a Keyence VHX-7100 (Keyence Cooperation, Japan). 10 measurements were taken at different positions, parameters according to ISO 25178: Sₐ mean arithmetic height, S_{z} maximum height, S_{q} mean quadratic height, Sₚ maximum apex height, Sᵥ maximum sink depth (S_{z} = Sₚ + Sᵥ). The measured values characterizing the surface roughness of the coating are summarized in Table 1. A microscopic image (200fold magnification) of the coating surface showed multiple Al particles protruding from the coating surface.

### Example 2

In this example, the preparation of coated Al foil as described in Example 1 was repeated, except that the doctor blade's gap was now set to 300 µm. Onto this first coating, a second coating of a pristine CAM-coating (96 wt.% CAM, 2 wt.% CB, 2 wt.% PVDF, slurry solids content 65 wt.%) was coated. The second coating was applied after the drying of the first coating, but before the calendering. The second coating was applied with a doctor blade's gap of 150 µm. After drying of the second coating, the 2-layer composite coated foil was calendered using the same conditions as in Example 1.

The roughness of the resulting composite coating was analyzed by light microscopy employing a Keyence VHX-7100 (Keyence Cooperation, Japan). 10 measurements were taken at different positions, parameters according to ISO 25178: Sₐ mean arithmetic height, S_{z} maximum height, S_{q} mean quadratic height, Sₚ maximum apex height, Sᵥ maximum sink depth (S_{z} = Sₚ + Sᵥ). The results are also summarized in Table 1. A microscopic image (200fold magnification) of the coating surface showed no Al particles protruding from the coating surface.

The data of Table 1 show that the values characterizing the surface roughness as heights all are smaller for the coating of Example 2, except Sᵥ (the maximum sink depth). This is not critical, as potential damages to the separator will only result from peaks, not from sinks. By covering an electrode coating contaminated with Al particles with a coating of pristine electrode active material, a composite coating having reduced overall surface roughness can be obtained.

**Table 1: Surface roughness data of coatings**

| **Ex.** | | **Sₐ [µm]** | **S_{z} [µm]** | **S_{q} [µm]** | **Sₚ [µm]** | **Sᵥ [µm]** | **Measuring area mm²** |
|---|---|---|---|---|---|---|---|
| 1 | average | 46,53 | 292,72 | 57,16 | 191,13 | 101,61 | 426 |
| | Std Dev | 19,14 | 78,98 | 22,71 | 57,95 | 26,27 | 3.5 |
| 2 | average | 29,80 | 266,92 | 39,26 | 146,99 | 119,93 | 427 |
| | Std Dev | 8,80 | 68,60 | 12,21 | 37,27 | 62,39 | 1.9 |

## Claims

1. A multi-layer battery electrode comprising a metal foil, at least one surface of the metal foil featuring a coating of at least one active electrode material, the coating comprising at least two layers of electrode active material arranged one above the other, wherein at least one of the layers which is not the topmost layer comprises at least one active electrode material obtained by direct recycling of batteries or battery components comprising metal foils coated with an active electrode material and comprises metal particles as contaminant.

2. The multi-layer battery electrode of claim 1, wherein both surfaces of the metal foil feature a coating of at least one active electrode material.

3. The multi-layer battery electrode of claim 2, wherein one of the surfaces features a single layer coating of at least one pristine active electrode material not comprising metal particles from direct recycling.

4. The multi-layer battery electrode of claim 2, wherein both surfaces feature a coating comprising at least two layers of electrode active material arranged one above the other, wherein at least one of the layers which is not the topmost layer comprises at least one active electrode material obtained by direct recycling of battery materials from batteries comprising metal foils coated with an active electrode material and comprises metal particles as contaminant.

5. The multi-layer battery electrode of any one of claims 1 to 4, wherein the metal foil is an aluminum foil or a copper foil.

6. The multi-layer battery electrode of any one of claims 1 to 5, wherein the metal particles comprise aluminum particles or copper particles.

7. The multi-layer battery electrode of any one of claims 1 to 6, wherein the electrode active material is a cathode active material or an anode active material.

8. The multi-layer battery electrode of claim 7, wherein the electrode active material is a cathode active material selected from the group consisting of lithiated nickel cobalt manganese oxide, lithiated nickel cobalt aluminum oxide, lithium metal phosphate, sodium metal oxides, sodium iron manganese oxide, sodium metal phosphate, and sodium Prussian white.

9. The multi-layer battery electrode of claim 7, wherein the electrode active material is an anode active material selected from the group consisting of natural graphite, synthetic graphite, amorphous carbon, silicon-containing carbon and lithium titanates.

10. A process for producing the multi-layer battery electrode of any one of claims 1 to 9, comprising the steps of
a) providing a first coating composition comprising at least one active electrode material obtained by direct recycling of batteries or battery components comprising metal foils coated with an active electrode material and comprising metal particles as contaminant,
b) providing a second coating composition comprising at least one pristine active electrode material not containing metal particles from direct recycling,
c) providing a metal foil,
d) coating at least one face of the metal foil with at least one layer of the first coating composition and at least one layer of the second coating composition to produce a coating comprising at least two layers of electrode active material arranged one above the other, wherein the second coating composition generates the topmost layer of the coating.

11. The process of claim 10, wherein in coating step d) the layer of the coating produced by the first coating composition and the layer of the coating produced by the second coating composition are produced one after another.

12. The process of claim 11, wherein each layer of the coating is dried and optionally calendered before the next layer is produced.

13. The process of claim 10, wherein in coating step d) at least the layer of the coating produced by the first coating composition and the layer of the coating produced by the second coating composition are produced simultaneously.

14. The process of claim 13, wherein a multi-layer slot die is used to produce the coating comprising at least two layers of electrode active material arranged one above the other.

15. A battery comprising at least one multi-layer battery electrode of any one of claims 1 to 9.
